# EUROPEAN PATENT APPLICATION

(11) **EP 4 760 263 A1**
(43) Date of publication of application: **17.06.2026**
(21) Application number: 24220312.3
(22) Date of filing: 16.12.2024
(51) Int. Cl.: G01N 35/02, G01N 21/25, B01F 29/10

(54) **PHOTOMETRIC LABORATORY ANALYZER**

(71) Applicant: Hach Lange GmbH, 14163 Berlin (DE)
(72) Inventor: GOLITZ, Andreas, 14163 Berlin (DE); JONAK, Andreas, 14163 Berlin (DE)
(74) Representative: terpatent PartGmbB

(57) **Abstract**

The invention refers to a photometric laboratory analyzer (200) for photometrically determining an analyte of a liquid sample (36) provided in a sample cuvette (301-305), the photometric laboratory analyzer (200) comprising
a stationary main device (100) with a photometer comprising a photometer light source (104) and a photometer light receiver (106), with an electronic photometer control (102) and with a cuvette tray reception (130) for accommodating a removable cuvette tray (10),
the removable cuvette tray (10) having at least two cuvette reception slots (21-25), wherein every cuvette reception slot (21-25) of the cuvette tray (10) is provided with a rotatable and mechanically drivable cuvette rotation means (42) which cuvette rotation means (42) is in physical contact with a sample cuvette (301-305) being inserted into the corresponding cuvette reception slot (21-25),
a tray driving arrangement comprising a tray driving motor (110) at the stationary main device (100) and a mechanical coupling (C) for mechanically driving the cuvette tray (10) to optically align one of the reception slots (21-25) with the photometer, and
a cuvette rotation arrangement comprising an electromagnetic energy transfer means (T) for a contactless transfer of electric energy from the stationary main device (100) to the cuvette tray (10), wherein the cuvette tray (10) is provided with an electric cuvette rotation motor (50) mechanically driving the cuvette rotation means (42).

## Description

The invention refers to a photometric laboratory analyzer for photometrically determining an analyte of a liquid sample provided in a sample cuvette.

EP 2 482 980 A1 discloses a typical photometric laboratory analyzer for photometrically determining an analyte of a single liquid sample provided in a sample cuvette, typically a water sample of wastewater or of drinking water. The use of a single liquid sample cuvette together with a photometric laboratory analyzer requires a couple of manual process steps for analysis preparation: Initially, the liquid sample is pipetted into the cuvette which cuvette normally already comprises a reagent. The cuvette is initially manually shaken to cause a homogenous mixing of the liquid sample and the reagent. In many applications, the user must provide an intermediate mixing action by shaking the cuvette again after a predetermined time interval to guarantee a short and predictable full-reaction time after which the reagent and the analyte of the liquid sample have completely reacted and the sample cuvette is ready to be photometered in the laboratory photometer. For a user it is therefore cumbersome to provide several analysis preparations in parallel.

WO 2023 057 318 A1 discloses an intelligent analysis preparation cuvette rack unit which supports the user to systematically provide the analysis preparation for several cuvettes in parallel. However, the analysis preparation cuvette rack unit is not provided with any means for moving the cuvette to provide an active intermediate mixing of the reagent with the liquid sample in the cuvette. The user still must provide the intermediate mixing action manually.

It is an object of the invention to provide a photometric laboratory analyzer which supports an efficient and reliable analysis preparation.

This object is solved according to the present invention with a photometric laboratory analyzer with the features of claim 1.

The photometric laboratory analyzer according to the invention for photometrically determining an analyte of a liquid sample which liquid sample is provided in a sample cuvette comprises a stationary main device and a mobile and removable cuvette tray, the cuvette tray having at least two cuvette reception slots. The removable cuvette tray can simply be removed from the stationary main device to allow the user to start the initial steps of the analysis preparation remote from the stationary main device, for example at the sampling site. The initial steps of the analysis preparation provided remote from the stationary main device can be, for example, the steps of pipetting the liquid sample into the cuvette and to provide a first mixing action. The removable cuvette tray allows to safely vertically accommodate at least two sample cuvettes during all steps of the analysis preparation. In the context of the present invention, an analyte can be any relevant parameter of the liquid sample, including indirect parameters of the water sample, such as COD etc.

The stationary main device is provided with a photometer comprising a photometer light source and a photometer light receiver. Preferably, the photometer is a transmissive photometer. The stationary main device is provided with an electronic photometer control controlling the electric and the electronic devices of the photometric laboratory analyzer. The stationary main device is provided with a cuvette tray reception for accommodating the removable cuvette tray. After the initial manual steps of the analysis preparation, the removable cuvette tray is inserted into the cuvette tray reception of the stationary main device.

The removable cuvette tray is provided with at least two cuvette reception slots, preferably with more than three cuvette reception slots. Every cuvette reception slot of the cuvette tray is provided with a rotatable and mechanically drivable cuvette rotation means which cuvette rotation means is in physical contact with a sample cuvette being inserted into the corresponding cuvette reception slot. The cuvette rotation means is in frictional connection and/or in form-fit connection with the inserted sample cuvette.

The photometric laboratory analyzer is provided with a tray driving arrangement comprising an electric tray driving motor at the stationary main device and a mechanical coupling for mechanically driving the cuvette tray or a part of it to optically align one of the cuvette reception slots including the inserted sample cuvette with the photometer.

The photometric laboratory analyzer is additionally provided with a cuvette rotation arrangement comprising an electromagnetic energy transfer means for a contactless transfer of electric energy from the stationary main device to the inserted cuvette tray when the cuvette tray is inserted into the cuvette tray reception of the stationary main device. The cuvette tray is provided with an electric cuvette rotation motor which cuvette rotation motor directly drives the at least one cuvette rotation means of a cuvette reception slot. The cuvette rotation arrangement allows to rotate one cuvette or all cuvettes which is/are inserted into the cuvette reception slots of the removable cuvette tray if the removable cuvette tray is inserted into the cuvette tray reception of the stationary main device. As a consequence, the inserted sample cuvettes do not need to be moved manually anymore to provide an intermediate liquid mixing action, to rotationally align the sample cuvette with an optical reader or with a camera, or to provide several photometric measurements of the photometer in different rotational angles of the inserted sample cuvette to improve measurement reliability and precision of the photometric measurement.

Since the energy transfer of electric energy from the stationary main device to the removable cuvette tray is provided via electromagnetic induction and without direct electric contact, the cuvette rotation arrangement is highly reliable and not sensitive for spilling liquids, humidity and mechanical wear.

Preferably, the cuvette rotation motor simultaneously drives all cuvette rotation means of the removable cuvette tray. Not only the cuvette rotation means of the cuvette reception slot which is aligned with the photometer, but all other cuvette rotation means of the removable cuvette tray are rotated synchronously if the cuvette rotation arrangement is activated. This allows to provide liquid mixing actions for all cuvette reception slots at any time and independent of the translational or rotational position of the inserted cuvette tray.

Preferably, the electromagnetic energy transfer means comprises a primary inductive coil at the stationary main device and a secondary inductive coil at the cuvette tray. When the removable cuvette tray is inserted into the cuvette tray reception of the stationary main device, the primary induction coil and the secondary induction coil are in-line and close to each other to provide an efficient electromagnetic energy transfer from the primary induction coil to the secondary induction coil.

Preferably, the stationary main device is provided with an energy transfer driving module directly driving the primary inductive coil with AC voltage. The removable cuvette tray is only provided with an electronic converter which converts the received AC voltage into a suitable driving voltage pattern for directly driving the electric cuvette rotation motor which motor can be a step motor. The AC voltage and have any suitable pattern, i.e. a sinus wave pattern, square wave pattern etc.

Preferably, the removable cuvette tray is not provided with any substantial control electronics and is not provided with an electric battery. The electric cuvette rotation motor is activated as soon as and as long as the primary induction coil of the stationary main device is energized.

Alternatively, the energy transfer driving module is able to add a digital information signal to the AC voltage by a suitable modulation of the AC voltage, so that a corresponding control electronics at the removable cuvette tray can receive control signals and instructions from the electronic photometer control of the stationary main device. The AC voltage is a low alternating voltage of maximally 60 V.

Preferably, the cuvette rotation arrangement comprises a driving belt which is driven by the cuvette rotation motor, and which drives the cuvette rotation means of the removable cuvette tray, and preferably synchronously drives all cuvette rotation means of the removable cuvette tray. No mechanical gear is necessary to mechanically couple all cuvette rotation means with the cuvette rotation motor.

Preferably, the driving belt is a toothed belt body with a toothed structure at one side or both sides of the toothed belt body. The cuvette rotation means are ring-like in shape and are provided with a corresponding tooth structure at their outside circumferences. The tooth structure of the belt body and corresponding complementary tooth structure the cuvette rotation means make sure that the cuvette rotation means and the inserted sample cuvettes are always rotated with a defined and predetermined rotation angle which is independent of mechanical wear, friction etc.

Generally, the removable cuvette tray can be a linear tray with one or more linear lines of several cuvette reception slots, and the tray driving arrangement causes a linear movement of the linear cuvette tray. Alternatively and preferably, the tray driving arrangement is designed as a rotary driving arrangement wherein the mechanical coupling directly causes a rotation of the rotatable cuvette tray. The cuvette reception slots of the rotatable cuvette tray are provided at a constant radius with respect to the rotation axis. Preferably, all cuvette reception slots of the cuvette tray are arranged in that way that no cuvette reception slot is arranged in 180° to another cuvette reception slot. This arrangement allows to provide the photometric transmissive measurement of the photometer exactly in diagonal direction of the rotatable cuvette tray.

Preferably, the primary ring-like induction coil and the secondary ring-like induction coil are provided coaxially with a rotation axis of the rotatable cuvette tray. As a result, the electromagnetic energy transfer means is always available and working, independent of the rotational position and rotational action of the removable cuvette tray inserted into the cuvette tray reception.

Preferably the mechanical coupling of the tray driving arrangement is designed to be vertically connectable and disconnectable. The cuvette tray reception is accessible vertically from the top, so that the mechanical connection and disconnection of the mechanical coupling is realized by simply inserting or removing the cuvette tray into the or from the cuvette tray reception of the stationary main device.

Preferably, the stationary main device is provided with an optical identification reader, and every sample cuvette is provided with an optically readable cuvette identification. The cuvette identification is provided at the outside of the sample cuvette and can be read by the identification reader when the position of the removable cuvette tray generally allows the identification reader to see the sample cuvette. Since the cuvette identification is generally visible from only one rotational side of the sample cuvette, the sample cuvette needs to be rotated to allow the identification reader to read the complete cuvette identification. If the cuvette rotation arrangement is designed to rotate all cuvette rotation means synchronously, the optical identification reader can be located at any position where at least one cuvette reception slot with the inserted sample cuvette is visible for the optical identification reader.

One embodiment of the invention is explained with reference to the enclosed drawings, wherein
figure 1 schematically shows a photometric laboratory analyzer according to the invention with a stationary main device defining a cuvette tray reception, and with a removable cuvette tray inserted into the cuvette tray reception,
figure 2 shows another schematic view of the photometric laboratory analyzer of figure 1, and

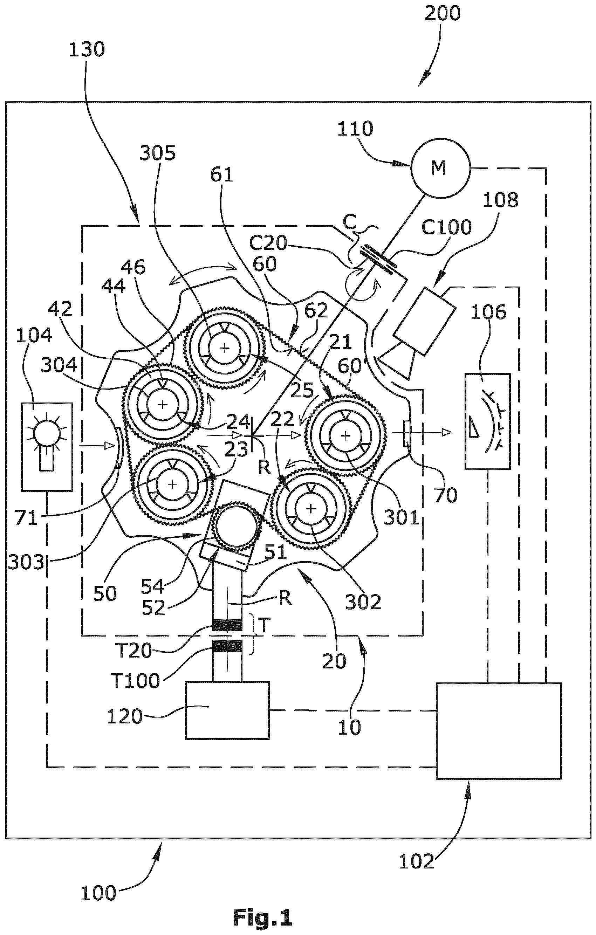

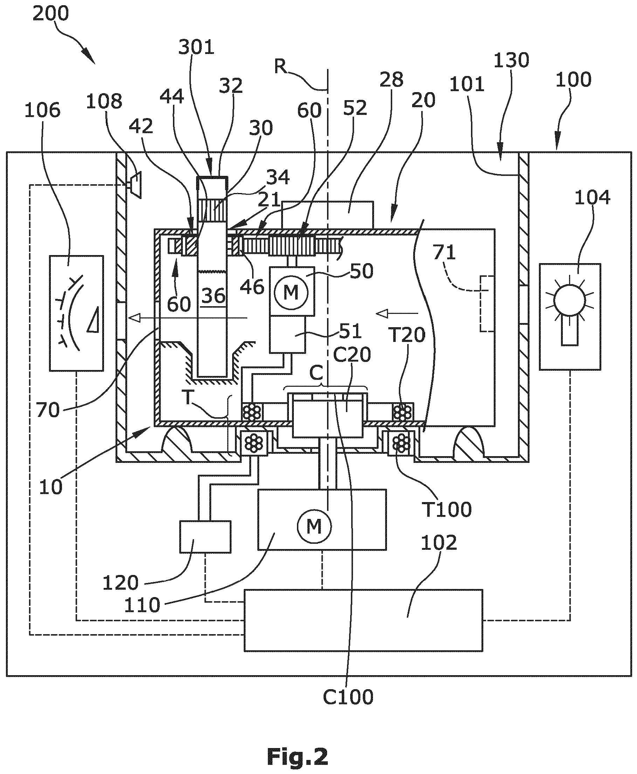

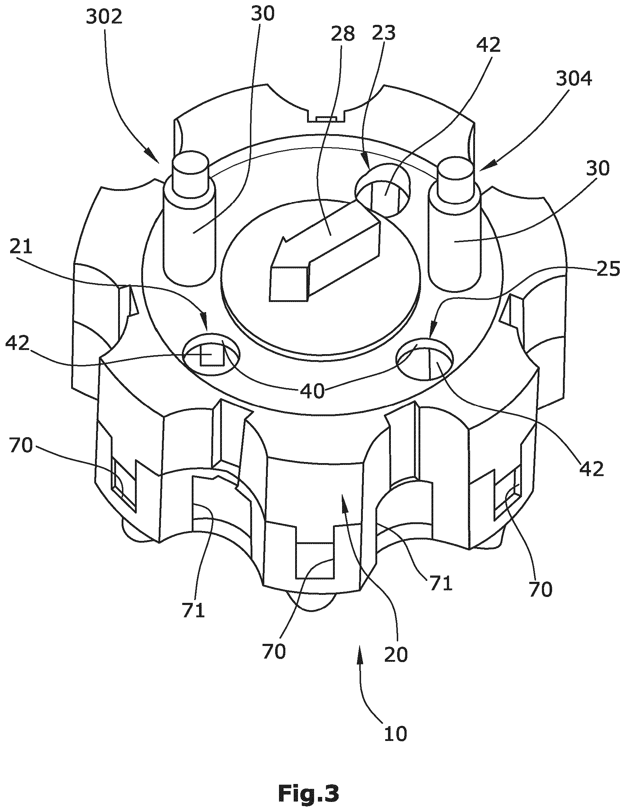

figure 2 shows a perspective view of the removable cuvette tray of figure 1.

Figures 1 and 2 schematically show a photometric laboratory analyzer 200 for photometrically determining an analyte of a liquid sample 36 provided in a sample cuvette 301-305. The analyte can generally be any liquid parameter, which can be determined optically by photometry, and preferably is a typical water parameter, for example nitrate, COD etc.

The photometric laboratory analyzer 200 comprises a stationary main device 100 and a removable cuvette tray 10. The stationary main device 100 is provided with a photometer comprising a photometer light source 104 and a photometer light receiver 106, with an electronic photometer control 102 controlling all electric and electronic devices of the photometric laboratory analyzer 200, with an optical identification reader 108 and with a cuvette tray reception 130 accommodating the removable cuvette tray 10.

The optical identification reader 108 is a two-dimensional camera.

The photometer is a transmissive photometer and optically can determine the absorbance of the liquid sample 36 at different defined wavelengths of the light emitted by the photometer light source 104 and received by the photometer light receiver 106. The laboratory analyzer 200 also comprises a tray driving arrangement for mechanically driving the removable cuvette tray 10 and comprises a cuvette rotation arrangement for rotating the sample cuvettes 301-305 inserted into the cuvette reception slots 21-25 of the removable cuvette tray 10.

The removable cuvette tray 10 is, in the present embodiment, a rotatable cuvette tray with a generally circular rotor design defining five different rotational measurement positions. The removable cuvette tray 10 is provided with a plastic housing 20 defining six radial light inlet windows 71, six radial light outlet windows 70 and five circular openings 40 at the housing top surface. The openings 40 define the insertion openings of the five cuvette reception slots 21-25. The cuvette tray plastic housing 20 also defines a grip handle 28 at the top surface of the cuvette tray housing 20.

Every substantially cylindrical cuvette reception slot 21-25 is provided with a ring-like cuvette rotation means 42 at the top end of every cuvette reception slot 21-25 right below the opening 40. Every cuvette rotation means 42 is rotatable and is provided with a tooth structure 46 at the outside ring circumference of the rotation means 42. At the inside of the ring -like cuvette rotation means 42, three proximal elastic clamping means 44 are provided so that a sample cuvette 301-305 which has been inserted into the corresponding cuvette reception slot 21-25 is frictionally clamped to the cuvette rotation means 42. The frictional clamping guarantees that the inserted sample cuvette 301-305 co-rotates with the cuvette rotation means 42 when the cuvette rotation means 42 is rotating.

The sample cuvettes 301-305 are generally cylindrical in shape, and are made of a cuvette body 30 made of optically transmissible glass which cuvette body 30 is closed at the top by a cuvette cap 32. The sample cuvettes 301-305 can be filled with a liquid sample 36 which reacts with a suitable reagent which reagent causes a change of the light absorbance at a defined wavelength dependent on the concentration of the analyte in the liquid sample 36. Every sample cuvette 301-305 is provided with a cuvette identification 34 which cuvette identification 34 is a camera-readable two-dimensional barcode identifying the analyte type, the reagent, a lot number, an expiry date etc.

The tray driving arrangement comprises an electric tray driving motor 110 at the stationary main device 100 and a mechanical coupling C for mechanically engaging and rotationally driving the cuvette tray 10 when the cuvette tray 10 is inserted into a cuvette tray reception 130 of the stationary main device 100. The cuvette tray reception 130 is defined by a suitable tray compartment below a tray reception opening 101 of the main device housing, through which reception opening 101 the tray compartment is accessible. The housing of the stationary main device 100 can be provided with a shiftable or pivotable cover lid for a light-tight closing of the tray reception opening 101.

The releasable mechanical coupling C is a form-fit coupling and comprises a driving coupling element C20 which is rotationally driven by the tray driving motor 110, and comprises a complementary driven coupling element C100 at the removable cuvette tray 10. The mechanical coupling C and the inserted cuvette tray 10 rotate around a rotation axis R.

The photometric laboratory analyzer 200 is provided with a cuvette rotation arrangement comprising an electric cuvette rotation motor 50 at the cuvette tray 10, an electromagnetic energy transfer means T for a contactless transfer of electric energy from the stationary main device 100 to the inserted cuvette tray 10 and with an energy transfer driving module 120 at the stationary main device 100. The electromagnetic energy transfer means T comprises a primary inductive coil T100 at the stationary main device 100 and a secondary inductive coil T20 at the cuvette tray 10. The primary inductive coil T100 is energized by the energy transfer driving module 120 with a suitable nominal AC voltage of, for example, 20 V.

Both inductive ring-like coils T20, T100 are arranged coaxially with the rotation axis R of the rotatable cuvette tray 10 and of the tray driving arrangement. The electric cuvette rotation motor 50 is provided with an electronic converter 51 which converter 51 transforms the AC voltage received by the secondary inductive coil T20 into a suitable voltage pattern for directly driving the electric cuvette rotation motor 50 being a step motor. The electronic converter 51 is not provided with any additional substantial intelligence, so that the electric cuvette rotation motor 50 is active as soon and as long as the primary inductive coil T100 is energized.

The electric cuvette rotation motor 50 is provided with a motor rotor wheel 52 which is provided with a tooth structure 54 at the outside circumference. The cuvette rotation motor 50 simultaneously drives all cuvette rotation means 42 via a driving belt 60, which driving belt 60 is defined by a toothed belt body 60' with a tooth structure 61, 62 at both sides of the toothed belt body 60'. As shown in figures 1 and 2, the driving belt 60 mechanically connects the motor rotor wheel 52 of the cuvette rotation motor 50 with the five cuvette rotation means 42.

For the initial analysis preparation, the removable cuvette tray 10 can be removed from the cuvette tray reception 130 of the stationary main device 100 by simply gripping the grip handle 28 and vertically removing the cuvette tray 10 out of the cuvette tray reception 130 through the opening 101. The removable cuvette tray 10 can be placed at a suitable place. The user then chooses a suitable new sample cuvette, and fills the chosen sample cuvette 303-305 with the liquid sample by pipetting. The sample-filled sample cuvette 303-305 is manually shaken and is inserted into one of the three cuvette reception slots 23-25 which are provided for samples. Two cuvette reception slots 21, 22 are provided with a sample cuvette 301, 302, respectively, the sample cuvettes 301, 302 being filled with a liquid having a first and a second standard absorption value.

The user can choose two more new sample cuvettes 303-305, provide a liquid sample into the cuvettes 303-305, and insert them into the remaining free cuvette reception slots 23-25. The user then inserts the removable cuvette tray 10 back into the cuvette tray reception 130 of the stationary main device 100 so that the mechanical coupling C engages. A measurement cycle is then initiated manually or automatically.

The photometer control 102 first initiates an identification run to read and identify the cuvette identifications 34 of the five sample cuvettes 301-305 by rotating the removable cuvette tray 10 to successively align the respective cuvette reception slots 21-25 including the sample cuvettes 301-305 with the optical identification reader 108, and by then activating the cuvette rotation arrangement to allow the optical identification reader 108 to see and record the complete cuvette identification 34.

After the identification run, the photometer control 102 generates a complete measurement plan including intermediate mixing actions for the sample cuvettes 301-305 for ensuring a defined reaction time after which the reaction between the analyte and the reagent is complete and including intermediate measurements for automatic reaction endpoint determination. An intermediate mixing action is provided by activating the cuvette rotation arrangement as described above.

When the defined reaction time has been reached, the respective cuvette reception slot 21-25 including the respective sample cuvette 301-305 is aligned with the photometer, as shown in figures 1 and 2 for sample cuvette 301, and the photometric determination of the absorbance is then made by the photometer. The photometric determination of the absorbance is made by at least three photometric measurements at different rotational angles of the respective sample cuvette 301-305. The rotation of the respective sample cuvette 301-305 is provided by activating the cuvette rotation arrangement for providing a rotation angle of, for example 45°.

When all photometric determinations have been finished, the respective concentrations of the analytes are displayed at a display and/or are sent to another device.

## Claims

1. A photometric laboratory analyzer (200) for photometrically determining an analyte of a liquid sample (36) provided in a sample cuvette (301-305), the photometric laboratory analyzer (200) comprising
a stationary main device (100) with a photometer comprising a photometer light source (104) and a photometer light receiver (106), with an electronic photometer control (102) and with a cuvette tray reception (130) for accommodating a removable cuvette tray (10),
the removable cuvette tray (10) having at least two cuvette reception slots (21-25), wherein every cuvette reception slot (21-25) of the cuvette tray (10) is provided with a rotatable and mechanically drivable cuvette rotation means (42) which cuvette rotation means (42) is in physical contact with a sample cuvette (301-305) being inserted into the corresponding cuvette reception slot (21-25),
a tray driving arrangement comprising a tray driving motor (110) at the stationary main device (100) and a mechanical coupling (C) for mechanically engaging and for driving the cuvette tray (10) to optically align one of the reception slots (21-25) with the photometer, and
a cuvette rotation arrangement comprising an electromagnetic energy transfer means (T) for a contactless transfer of electric energy from the stationary main device (100) to the cuvette tray (10), wherein the cuvette tray (10) is provided with an electric cuvette rotation motor (50) mechanically driving the cuvette rotation means (42).

2. The photometric laboratory analyzer (200) of claim 1, wherein the electromagnetic energy transfer means (T) comprises a primary inductive coil (T100) at the stationary main device (100) and a secondary inductive coil (T20) at the cuvette tray (10).

3. The photometric laboratory analyzer (200) of the preceding claim, wherein the stationary main device (100) is provided with an energy transfer driving module (120) energizing the primary inductive coil (T100) with an AC voltage.

4. The photometric laboratory analyzer (200) of the preceding claim, wherein the energy transfer driving module (120) energizes the primary inductive coil (T100) only for directly activating the cuvette rotation motor (50).

5. The photometric laboratory analyzer (200) of one of the preceding claims, wherein the cuvette rotation motor (50) simultaneously drives all cuvette rotation means (42).

6. The photometric laboratory analyzer (200) of one of the preceding claims, wherein the cuvette rotation arrangement comprises a driving belt (60) which is driven by the cuvette rotation motor (50) and which drives the cuvette rotation means (42).

7. The photometric laboratory analyzer (200) of the preceding claim, wherein the driving belt (60) is a toothed belt body (60') with a tooth structure (61, 62) at one side or at both sides of the toothed belt body (60'), and wherein the cuvette rotation means (42) are ring -like in shape and are provided with corresponding tooth structures (46) at their outside circumferences.

8. The photometric laboratory analyzer (200) of one of the preceding claims, wherein the tray driving arrangement is designed as a rotatory driving arrangement, wherein the mechanical coupling (C) directly causes a rotation of the rotatable cuvette tray (10).

9. The photometric laboratory analyzer (200) of one of the preceding claims 1 to 7, wherein the tray driving arrangement is designed as a linear driving arrangement, wherein the mechanical coupling causes a linear movement of the linearly drivable cuvette tray.

10. The photometric laboratory analyzer (200) of the preceding claim, wherein the primary inductive coil (T100) and the secondary induction coil (T20) are provided coaxially with a rotation axis (R) of the rotatable cuvette tray (10).

11. The photometric laboratory analyzer (200) of one of the preceding claims, wherein the cuvette rotation means (42) are ring-like in shape and are provided with proximal clamping means (44) for clamping the inserted sample cuvette (301-305).

12. The photometric laboratory analyzer (200) of one of the preceding claims, wherein the mechanical coupling (C) is designed to be vertically connectable and disconnectable.

13. The photometric laboratory analyzer (200) of one of the preceding claims, wherein the stationary main device (100) is provided with an optical identification reader (108) and every cuvette (301-305) is provided with an optically readable cuvette identification (34), which cuvette identification (34) is provided at the outside of the cuvette (301-305) and can be read by the identification reader (108) when the cuvette (301-305) is inserted into one of the cuvette reception slots (21-25) and the position of the removable cuvette tray (10) generally allows the identification reader (108) to see the cuvette identification (34).
